# EUROPÄISCHE PATENTSCHRIFT

(11) **EP 1 825 589 B1**
(45) Veröffentlichungstag und Bekanntmachung des Hinweises auf die Patenterteilung: **31.05.2017**
(21) Anmeldenummer: 05811165.9
(22) Anmeldetag: 03.11.2005
(51) Int. Cl.: H02K 15/02

(54) **FERTIGUNGSEINRICHTUNG UND VERFAHREN ZUR HERSTELLUNG EINES ELEKTROMAGNETISCHEN ELEMENTS FÜR EINE ELEKTRISCHE MASCHINE**
MANUFACTURING DEVICE AND METHOD FOR PRODUCING AN ELECTROMAGNETIC ELEMENT FOR AN ELECTRICAL MACHINE
SYSTÈME DE FABRICATION ET PROCÉDÉ DE PRODUCTION D'UN ÉLÉMENT ELECTROMAGNÉTIQUE POUR MACHINE ÉLECTRIQUE

(30) Priorität: 06.12.2004 DE 102004058659
(43) Veröffentlichungstag der Anmeldung: 29.08.2007
(73) Patentinhaber: ROBERT BOSCH GMBH, 70442 Stuttgart (DE)
(72) Erfinder: RAU, Eberhard, 70825 Korntal-Muenchingen (DE); HENNE, Martin, 71696 Moeglingen (DE); PFLUEGER, Klaus, 71735 Eberdingen (DE)
(86) Internationale Anmeldenummer: PCT/EP2005/055731
(87) Internationale Veröffentlichungsnummer: WO 2006/061294

(56) Entgegenhaltungen:
- EP-A- 1 109 286
- WO-A-01/54254
- DE-B- 1 089 465
- FR-A- 2 431 330
- US-A1- 2004 010 907
- US-B1- 6 584 672

## Beschreibung

### Stand der Technik

Die Erfindung geht aus von einer Fertigungseinrichtung und einem Verfahren zur Herstellung eines elektromagnetischen Elements für eine elektrische Maschine nach den Oberbegriffen der unabhängigen Ansprüche.

Es ist bereits in der WO 01/54254 A1 vorgeschlagen worden, für Statoren elektrischer Maschinen, die als Hochleistungs-Generatoren für Kraftfahrzeuge eingesetzt werden sollen, streifenförmige Lamellen zu einem im Wesentlichen quaderförmigen Lamellenpaket zu fügen, das Lamellenpaket durch Rundbiegen in eine hohlzylindrische Form umzuformen und die beiden Enden miteinander stoffschlüssig z.B. durch Schweißen zu verbinden. Dies gelingt umso besser, je besser eine formschlüssige Verbindung der Enden herzustellen ist. Weiterhin ist eine möglichst gute Rundheit des so gebildeten Stators in seiner Statorbohrung zu erzielen. Je besser die Rundheit ist, desto kleiner kann der Luftspalt der Maschine ausgeführt werden, desto besser ist die Materialausnutzung und desto besser ist die Leistungsausbeute und desto geringer ist die Geräuschentwicklung der elektrischen Maschine.

Zur Verbesserung der Rundheit ist in der EP 1 109 286 A2 vorgeschlagen worden, dass gleich zu Herstellungsbeginn die beiden Enden des quaderförmigen Lamellenpakets so angekippt werden, dass das Lamellenpaket in diesem Bereich eine vorbestimmte Krümmung einnimmt und dass erst dann das ganze Lamellenpaket in die hohlzylindrische Form rundgebogen wird, indem das Lamellenpaket um einen zylindrischen Biegedorn gelegt und mit einer von außen angreifenden Biegerolle angedrückt wird. Im flachen Zustand sind beide Enden noch frei zugänglich und können auf einfachste Weise so verformt werden, dass nach dem Rundbiegen des Lamellenpakets die vorgebogenen Enden sich gegenüberstehen und nur noch verbunden werden müssen. Damit kann eine gute Rundheit des Stators erreicht werden. Falls jedoch eine Kernwicklung mit zumindest einem Wicklungsüberhang gewickelt und in das Lamellenpaket gefügt wird und an einem seiner Enden zumindest eine Nut zur Aufnahme des Wicklungsüberhangs vorgesehen ist, kann dieses Ende nicht angekippt und vorgebogen werden, da die Nuten in diesem Bereich beim Biegen geschlossen werden und der Wicklungsüberhang dann nicht mehr in die vorbestimmte Nut gefügt werden kann.

Weiterhin ist eine Vielzahl von Anforderungen an eine Fertigung eines elektromagnetischen Elements zu erfüllen. Unter anderem treten bei ungünstigen Wicklungsarten und Spulenformen Ungleichförmigkeiten der Ausdehnungen der Lamellen an den Paketstirnseiten und der Paketmitte auf, was zu einer ungleichförmigen Spaltbreite der zusammenzufügenden Enden des Lamellenpakets führt, dies umso mehr, je dünner die Lamellen und je sperriger die Wickelköpfe sind.

Ein uneinheitliches Biegeverhalten einzelner Lamellen führt auch zu Problemen beim Fügen der Überhangspule. Teilweise muss bei Lamellenpaketen mit Überhangspulen etappenweise gebogen werden, um ein Fügen der Überhangspule zu ermöglichen, was zu großer Unrundheit führt.

Aus dem Dokument US 6584672 B1 ist eine Fertigungseinrichtung zum Biegeumformen eines elektromagnetischen Elementes einer elektrischen Maschine bekannt, wobei das elektromagnetische Element aus einem biegeumgeformten Lamellenpaket gebildet ist Des Weiteren wird dort das vorgebogene Lamellenpaket fertig umgeformt

### Vorteile der Erfindung

Es wird von einer Fertigungseinrichtung zum Biegeumformen eines elektromagnetischen Elements einer elektrischen Maschine ausgegangen, wobei das elektromagnetische Element aus einem biegeumgeformten und fertigumgeformten Lamellenpaket gebildet ist.

Die Erfindung ist eine Fertigungseinrichtung gemäss Anspruch 1 sowie ein Verfahren zur Herstellung eines elektromagnetischen Elements gemäss Anspruch 22. Weitere Ausgestaltungsformen der Erfindung sind in den abhängigen Ansprüchen definiert.

Es wird eine erste Vorrichtung zum Biegeumformen des quaderförmigen Lamellenpakets und damit zum Rundbiegen, sowie eine zweite Vorrichtung zum Fertigumformen des vorgebogenen Lamellenpakets vorgeschlagen, die dazu dient, das vorgebogene und noch an Stosskanten bildenden Enden offene Lamellepaket so fertig umzuformen, dass es an den Enden des Lamellenpakets spaltfrei ist. Dabei weist die zweite Vorrichtung eine erste Baugruppe zur axialen Fixierung und Pressung des Lamellenpakets und eine zweite Baugruppe zur radialen Zentrierung und Pressung des Lamellenpakets auf. Diese Funktionen weisen die beiden Baugruppen wenigstens kurzzeitig gleichzeitig auf, so dass das gebogene Lamellenpaket wenigstens kurzzeitig gleichzeitig axial und radial zentrierbar und pressbar ist.

In einer günstigen Ausgestaltung umfasst die erste Vorrichtung einen Biegedom, um den das Lamellenpaket biegbar ist, wobei der zylindrische Biegedorn einen grösseren Aussendurchmesser aufweist als einem Innendurchmesser des fertig gebogenen elektromagnetischen Elements entspricht. Ein Ankippen der beiden Enden des quaderförmigen Lamellenpakets vor dem eigentlichen Rundbiegen, was die Zugänglichkeit der Nuten zum Einfügen von Spulen erschwert, kann entfallen. Weist der Biegedorn entlang seines Umfangs wenigstens abschnittsweise radiale Erhöhungen, z.B. Noppen, auf, können diese als Anschlag für einen Zahn des Lamellenpakets bzw. den Zahnkopf des Zahns dienen. Zwischen Zähnen des Lamellenpakets sind Nuten angeordnet, welche zur Aufnahme von Wicklungen aus Spulendrähten vorgesehen sind. Als Anschlag dient dabei wenigstens eine in Biegerichtung weisende Flanke der Erhöhungen. Die Erhöhungen dienen zur Fixierung der Zähne in Umfangsrichtung. Eine radiale Ausrichtung und eine gute axiale Fluchtung der Zähne kann damit gewährleistet werden. Zusätzlich wird ein gleichmäßiges Biegeverhalten der Lamellen ermöglicht und ein Ausbilden eines Längenunterschieds der Lamellen beim Biegen vermieden. Es kann sichergestellt werden, dass eine Fügeposition für einen Wicklungsüberhang erreicht wird.

In einer günstigen Weiterbildung weist der Biegedorn wenigstens eine axial verlaufende Nut auf. Während der Montage kann diese mindestens den Wicklungsüberhang oder auch den Wicklungsüberhang mit zugehörigem Nutverschluss aufnehmen. Das Biegeumformen eines quaderförmiges Lamellenpakets, das in seinen Nuten eine Wicklung mit Wicklungsüberhang aufweist, wird damit möglich. Die Wicklung kann serientauglich komplett und unterbrechungsfrei vorgefertigt werden. Ein nachträglicher Aufwand für eine Leiterverbindung der Wicklungen entfällt.

In einer günstigen Weiterbildung weist die erste Vorrichtung eine Andrückeinheit auf. Vorzugsweise weist die Andrückeinheit einen Durchmesser von mehr als 25 mm, bevorzugt mehr als 30 mm, auf. Biegekräfte und damit eine Streckung des Lamellenpakets werden reduziert mit der Folge, dass Innendurchmesser und Fügeposition für den Wicklungsüberhang definiert erreicht werden können.

Bevorzugt weist die Andrückeinheit einen nahezu unendlich großen Durchmesser auf, so dass die Andrückeinheit für den Biegeumformvorgang einen geraden Abschnitt aufweist. Biegekräfte und die unerwünschte Streckung des Lamellenpakets können so noch stärker reduziert werden. Innendurchmesser und Fügeposition für den Wicklungsüberhang werden sicher und unter optimierten Verhältnissen erreicht.

In einer günstigen Weiterbildung weist die Andrückeinheit an ihrer dem Lamellenpaket zugewandten Seite eine gezahnte oder gewellte Kontur auf. Dies ist bei einem Lamellenpaket bzw. einem daraus gebildeten elektromagnetischen Element vorteilhaft, das eine gezahnte oder gewellte Außenkontur aufweist. Die Kontur der Andrückeinheit taucht zumindest teilweise in die Außenkontur des Lamellenpakets ein und stützt sich an den Seitenflanken der Außenkontur ab. Ein gleichmäßiges Biegeverhalten der Lamellen wird unterstützt und ein Längenunterschied der Lamellen beim Biegen vermieden. Es kann sichergestellt werden, dass die Fügeposition für den Wicklungsüberhang erreicht wird. Über die axiale Länge des Lamellenpakets gesehen ergibt sich eine gleichmäßige Spaltbreite zwischen den sich nach dem Biegen gegenüberstehenden Enden des Lamellenpakets.

In einer günstigen Weiterbildung ist die Andrückeinheit mittels einer Druckrolle geschleppt antreibbar. Gemeinsame Kontaktflächen von Andrückeinheit und Druckrolle weisen eine glatte Oberfläche auf. Insbesondere bei Lamellenpaketen mit gezahnter Außenkontur ergibt sich ein weicher Biegeablauf, da eine Rollbewegung der Druckrolle von der gezahnten Außenkontur des Lamellenpakets entkoppelt ist.

In einer günstigen Weiterbildung weist die Andrückeinheit zusätzliche Vorrichtungen zur axialen Ausrichtung von Wickelköpfen und/oder für ein axiales Vorspannen des Lamellenpakets auf. Durch das axiale Ausrichten kann auf einer A-Seite und einer B-Seite entsprechend einer vorbestimmten Wickelkopfhöhe eine axiale Ausladung der Wickelköpfe gegenüber den Stirnseiten des Lamellenpakets eingestellt werden. Durch das axiale Vorspannen des Lamellenpakets können auch Lamellen mit geringen Blechdicken, z.B. von höchstens 0,65 mm, gebogen werden, ohne Wellen zu bilden. Die axiale Ausrichtung der Wicklung gegenüber dem Lamellenpaket wird sichergestellt, da ein Festsitz der Wicklung im flachen Lamellenpaket, d.h. bei noch offenen Nuten, zunächst noch unzureichend ist. Das Lamellenpaket wird über seine gesamte Lamellenlänge axial vorgespannt, d.h. Lamellen werden in Stapelrichtung zusammengespannt. Es kann vermieden werden, dass bei geringer Lamellenblechstärke die Lamellen beim Biegen wellen bzw. unzulässig aus der Blechebene verformt werden.

Günstigerweise ist ein quaderförmiges Lamellenpaket in der ersten Vorrichtung ohne Vorbearbeitung, wie z.B. ein Ankippen der Enden des Lamellenpakets, auf nur einer Vorrichtung unter definierten Bedingungen rundbiegbar.

In der ersten Vorrichtung sind zum Rundbiegen eines quaderförmigen Lamellenpakets zu einem gebogenen Lamellenpaket vorzugsweise folgende Verfahrensschritte ausführbar. Das quaderförmige Lamellenpaket wird zunächst mit seinem ersten vollen Zahn auf den Biegedorn zwischen zwei umfänglichen Erhöhungen, z.B. Noppen, exakt ausgerichtet und fest gespannt. Mit einem ersten Stempel am ersten Halbzahn des Lamellenpakets wird eine zur Biegekraft wirkende Gegenkraft, eine so genannte Haltekraft, aufgebracht und das Lamellenpaket mit der Druckrolle gegen ein Ausweichen abgestützt. Vor dem Biegebeginn wird der Wicklungsüberhang festgehalten. Die Druckrolle wird auf eine Vorspur-Winkelposition eingerichtet. Das Lamellenpaket wird abschnittsweise in verschiedene Winkelpositionen gebogen. In den unterschiedlichen Winkelpositionen wird mit mindestens einer Spannbacke der dann jeweils gebogene Teil des anfänglich quaderförmigen Lamellenpakets auf dem Biegedorn fest gespannt. Der Wicklungsüberhang wird in die Nut des Biegedorns gefügt. Der Wicklungsüberhang wird in die Nut des Lamellenpakets gefügt. Mit Spannbacken einer Vorrichtung, die radial von außen auf das Lamellenpaket zugeführt wird, werden die beiden Enden des Lamellenpakets auf dem Biegedorn fest gespannt. Mit dieser Vorrichtung und deren Stempel wird zwischen die Enden des Lamellenpakets bis zum Biegedorn gefahren, wobei auf die Seitenflanken der beiden Halbzähne an den Enden gedrückt wird und diese so auseinandergespreizt werden, dass sie sich in tangentialer Richtung verformen und dabei die von ihnen begrenzte Nuten, die umfängliche erste und die letzte Nut des Lamellenpakets, schließen. Das vorgebogene Lamellenpaket wird an die zweite Vorrichtung zum Fertigumformen, die auch eine Vorrichtung zum stoffschlüssigen Fügen aufweisen kann, übergeben. Insgesamt gelingt in diesem Verfahrensschritt das Biegen eines Lamellenpakets, das auch an den Enden eine gleich große Jochhöhe wie im übrigen Lamellenpaket aufweist, d.h. das Lamellenpaket weist im gesamten Biegebereich eine konstante Jochhöhe auf.

In einer günstigen Weiterbildung ist ein Teil der zweiten Vorrichtung der Fertigungseinrichtung als Übergabewerkzeug des vorgebogenen Lamellenpakets zwischen der ersten und der zweiten Vorrichtung vorgesehen. Es ist günstig, wenn die zweite Vorrichtung eine Einspannvorrichtung für das fertig gebogene Lamellenpaket zum stoffschlüssigen Fügen von zusammenstoßenden freien Enden des Lamellenpakets aufweist. Vorzugsweise erfolgt das stoffschlüssige Fügen mittels Laserschweißen.

In einer günstigen Weiterbildung weist die zweite Vorrichtung einen Schweißdom mit einem Durchmesser entsprechend dem Innendurchmesser des fertig gebogenen Lamellenpakets auf. Ferner ist günstig, wenn der zylindrische Schweißdorn an seinem Umfang radiale Erhöhungen aufweist, die mit Nutöffnungen des fertig gebogenen Lamellenpakets korrespondieren. Die Erhöhungen sind zweckmäßigerweise als Noppen ausgebildet. Vorteilhaft ist, wenn die zweite Vorrichtung eine Einrichtung mit Segmenten zum radialen Andrücken des in der ersten Vorrichtung vorgebogenen Lamellenpakets auf den Schweißdorn aufweist. Damit kann das Lamellenpaket zuverlässig auf dem Schweißdorn fixiert werden.

Vorzugsweise sind die Segmente in wenigstens zwei Gruppen aufgeteilt. Optional können die Gruppen von Segmenten unterschiedlich bzw. unabhängig voneinander antreibbar sein, z.B. Kraft-Weg-gesteuert.

Zweckmäßigerweise erstreckt sich jede Gruppe von Segmenten bezogen auf den Außendurchmesser des fertig gebogenen Lamellenpakets über einen Winkelbereich von weniger als 180°. Der Winkelbereich der ersten Segmentgruppe ist vorzugsweise bezüglich der Stoßkanten bildenden Lamellenpaket-Enden auf der gegenüberliegenden Durchmesserseite symmetrisch zu einer Achse angeordnet, die mittig zwischen den Lamellenpaket-Enden verläuft. Der Winkelbereich der zweiten und jeder weiteren Segmentgruppe schließt sich an den der ersten bzw. jeweils vorhergehenden Segmentgruppe an und erstreckt sich dann in Richtung der Lamellenpaket-Enden, wobei sich der Winkelbereich achssymmetrisch auf beiden Seiten jener Achse angeordnet ist, die mittig zwischen den Lamellenpaket-Enden verläuft.

In einer günstigen Weiterbildung sind die Segmente zweiteilig und/oder keilförmig ausgebildet, z.B. in Form eines Systems von Druckkeil und Antriebskeil. Dabei haben die einzelnen Keilpaare eine gemeinsame Gleitfläche, die eine Relativbewegung zueinander ermöglicht. Die Druckkeile sind vorzugsweise in ihrer zum Stator zeigenden Innenkontur dem Außendurchmesser des Lamellenpakets angepasst, während die Außenkontur eine mit den Antriebskeilen gemeinsame Berührungsfläche aufweist, die in Axial- und Radialrichtung geneigt ist und als Gleitfläche dient. Die Druckkeile sind im Wesentlichen nur in Radialrichtung beweglich. Die Antriebskeile sind gegenüber den Druckkeilen axial und radial nach außen versetzt angeordnet und im Wesentlichen nur in Axialrichtung beweglich. Sie werden von einem anderen Vorrichtungsteil angetrieben. Die Axialbewegung der Antriebskeile wird in eine Radialbewegung der Druckkeile umgewandelt. Bevorzugt bestehen die Segmente aus mindestens fünf Keilpaaren.

In einer günstigen Weiterbildung weist die zweite Vorrichtung eine Baugruppe zur axialen Zentrierung und Pressung des vorgebogenen Lamellenpakets auf, wobei eine Axialkraft auf beiden Stirnseiten sowohl am Innendurchmesser als auch am Außendurchmesser des fertig gebogenen Lamellenpakets einleitbar ist.

In der zweiten Vorrichtung sind zum Fertigumformen des vorgebogenen Lamellenpakets zum gewünschten elektromagnetischen Element einer elektrischen Maschine folgende Verfahrensschritte ausführbar. Das vorgebogene und noch an den Stoßkanten bildenden Enden offene Lamellenpaket wird in die zweite Vorrichtung eingelegt und ausgerichtet. Segmente der ersten Gruppe werden soweit zugestellt, dass sich im Bereich der ersten Segmentgruppe das Lamellenpaket an den Schweißdorn anlegt. Die Segmente der zweiten und jeder weiteren Gruppe werden gleichzeitig und gegebenenfalls mit jeweils entsprechend geeignetem Nachlauf der ersten bzw. der vorhergehenden Gruppe soweit zugestellt, dass sich auch im Bereich der zweiten und jeder weiteren Segment-Gruppe das Lamellenpaket an den Schweißdorn anlegt. Das Vorrichtungsmodul für das axiale Vorspannen des Lamellenpakets wird zugestellt. Segmente aller Gruppen werden gleichzeitig, gleichmäßig und gleich weit zugestellt. Die Lamellenpaket-Enden werden miteinander verbunden.

Vorteilhaft ist, dass ein quaderförmiges Lamellenpaket gebogen werden kann, das auch an den Enden eine gleich große Jochhöhe wie im übrigen Lamellenpaket aufweist, d.h. es kann ein Lamellenpaket mit im gesamten Biegebereich konstanter Jochhöhe geschaffen werden. Ein spaltfreier Stoß der beiden Lamellenpaket-Enden nach dem Fertigumformen und damit ein maßhaltiger Durchmesser und eine gute Rundheit der Bohrung des elektromagnetischen Elements, insbesondere eines Stators, werden ermöglicht. Unzulässige Verformungen wie Wellen der Lamellen beim Biegen von Lamellen mit geringen Blechstärken unter etwa 0,65 mm werden vermieden.

### Zeichnungen

Ausführungsformen und Vorteile der Erfindung ergeben sich aus nachfolgend anhand von Zeichnungen dargestellten Ausführungsbeispielen der Erfindung.

Im Folgenden zeigen:
- Fig. 1: schematisch ein Lamellenpaket mit Innenzähnen und Außenzähnen;
- Fig. 2: einen Schnitt durch einen Biegedorn;
- Fig. 3: eine Aufsicht auf eine dreidimensionale erste Vorrichtung einer erfindungsgemäßen Fertigungseinrichtung;
- Fig. 4 a, b: mehrere Ansichten einer Andrückeinheit von der einem Lamellenpaket zugewandten Fläche (a) und von der Seite entlang der Linie B-B (b); und

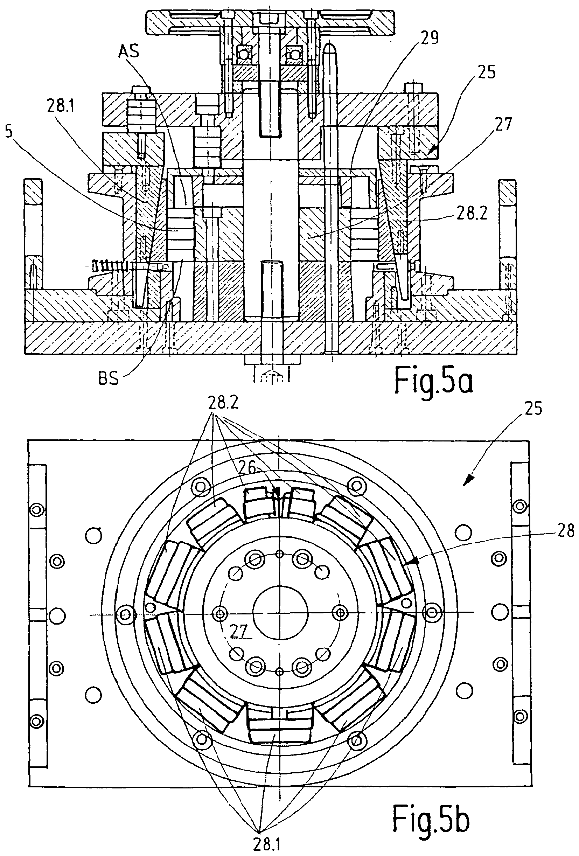

- Fig. 5 a, b: einen Längsschnitt durch einen Teil einer zweiten Vorrichtung (a) und eine Draufsicht auf die Vorrichtung (b).

### Beschreibung des Ausführungsbeispiels

Das Ausführungsbeispiel bezieht sich auf ein nicht abgebildetes, als Stator ausgebildetes elektromagnetisches Element einer elektrischen Maschine mit 48 Nuten sowie mit einer Polzahl 2p=16, mit einer Nutzahl q je Pol und Phase von q=1 und einer Phasenzahl m=3. Für anders ausgelegte elektromagnetische Elemente gilt die Beschreibung mit entsprechend angepassten Dimensionierungen entsprechend im übertragenen Sinn.

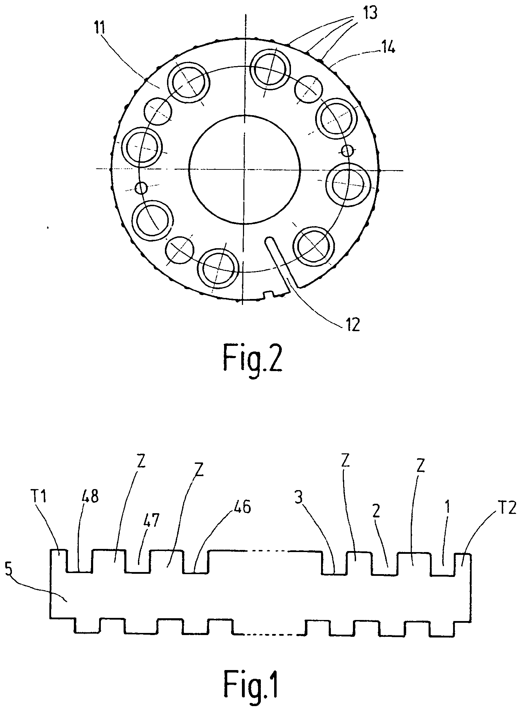

Zur Herstellung eines elektromagnetischen Elements, insbesondere eines Stators, wird zunächst in an sich üblicher Weise ein quaderförmiges Lamellenpaket 5 gebildet, wie in Figur 1 schematisch dargestellt ist. Aus einem beispielsweise kaltgewalzten Blechband werden im Quer- und/oder Längsstanzverfahren streifenförmige Lamellen hergestellt. Das Blechband entspricht einer Elektroblechgüte, und die Blechstärke beträgt zwischen 0,35 und 1 mm, vorzugsweise um 0,5 mm. Die Lamellen weisen Innenzähne T1, T2, Z und nicht näher bezeichnete Außenzähne auf. Die Zähne T1, T2, Z sind durch Nuten beabstandet, wobei an den Lamellen-Enden nur Halbzähne T1, T2 ausgebildet sind. Die Halbzähne T1, T2 sind nur als Innenzähne, aber nicht als Außenzähne ausgebildet. An den Lamellen-Enden sind die Stirn-Enden zur Lamellen-Längsachse bzw. neutralen Faser nicht rechtwinklig, sondern weichen von einer ebenen Schnittfläche ab. Die Lamellen weisen eine Jochhöhe auf, die über die gesamte Lamellenlängsachse konstant ist, also auch im Bereich der Lamellen-Enden, z.B. der jeweils ersten Nutteilung. Die Lamellen werden in geeigneter Weise mit oder ohne Umschlag aufeinander gestapelt.

Die Lamellen werden unter einer definierten Kraft in Stapelrichtung vorgespannt und an geeigneter, vorbestimmter Position miteinander verbunden, z.B. verschweißt.

Als nächster Schritt wird eine Wicklung hergestellt und montiert, die später im Einsatz in einer elektrischen Maschine zur Erzeugung eines elektromagnetischen Felds bestromt wird. Eine mehrphasige Wicklung, z.B. dreiphasig, wird auf einer Wickelschablone gewickelt. Die Wicklung weist mindestens eine Überhangspule (Einschleifenwicklung) auf, es können jedoch auch mehrere, z.B. drei sein (Zweischichtenschleifenwicklung).

Jede Phasenwicklung besteht aus mehreren Spulen, die der Polpaarzahl entsprechen, z.B. 8 Spulen. Im Falle von in Reihe geschalteten Spulen wird die Phasenwicklung unterbrechungsfrei als so genannte Spulenkette gewickelt. Anschließend wird die Wicklung im Nutenbereich auf die Nutform des herzustellenden, als Stator ausgebildeten runden elektromagnetischen Elements unter Umformen ihrer runden Drahtquerschnitte in beliebige, verschiedengestaltige Drahtquerschnitte geprägt. Dann folgt das Einlegen der Wicklung in die z.B. mit einem Flächenisolierstoff ausgekleideten Nuten des quaderförmigen Lamellenpakets. Die Nutverschlüsse werden montiert mit Ausnahme desjenigen, der die den Wicklungsüberhang aufnehmende Nut (Nut 2 bei einer Einschichtschleifenwicklung) verschließt, bzw. mit Ausnahme derjenigen, welche die den Wicklungsüberhang aufnehmende Nuten (Nut 3, Nut 2, Nut 1 bei einer Zweischichtschleifenwicklung) verschließen.

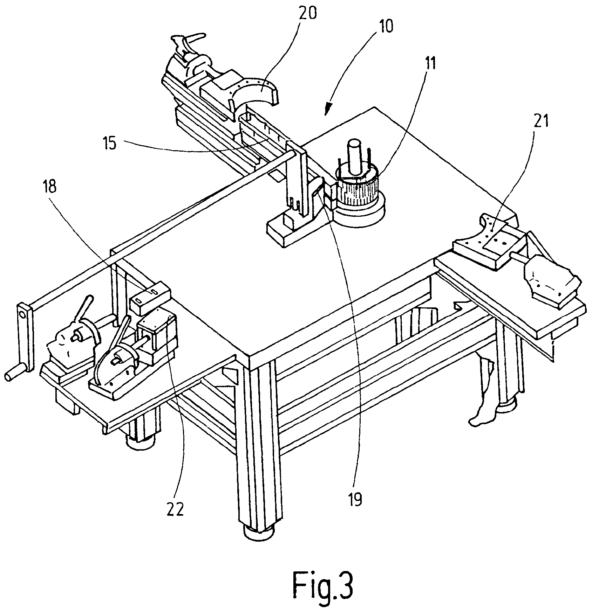

Anschließend wird das quaderförmige Lamellenpaket 5 mit montierter Wicklung zum Rundbiegen auf eine erste, in Figur 3 dargestellte Vorrichtung 10 einer erfindungsgemäßen Fertigungseinrichtung montiert. Beim Rundbiegen des nicht abgebildeten Lamellenpakets 5 zu einem runden elektromagnetischen Element um einen zylindrischen Biegedom 11 herum ist das Fügen des Wicklungsüberhangs mit enthalten. Der Biegedorn 11 weist einen Durchmesser auf, der größer ist als der des fertig gebogenen Lamellenpakets 5 und weist wenigstens eine axial verlaufende Nut 12 zur Aufnahme eines Wicklungsüberhangs auf. Weiterhin weist der Biegedorn an seinem Umfang radiale als Noppen ausgebildete Erhöhungen 13 auf, die durch Nuten 14 getrennt sind, wie in Figur 2 zu erkennen ist. In der Figur sind nur einige der Elemente mit Bezugszeichen gekennzeichnet.

Der Biegevorgang beginnt an einem Ende des Lamellenpakets 5 bei Nut 48 (Figur 1). Im Falle einer Einschichtschleifenwicklung, die als Wicklungsüberhang nur eine Überhangspule aufweist, steht an einem Phasenwicklungs-Ende eine Spulenseite der Überhangspule gegenüber dem Lamellenpaket 5 über, während die andere Spulenseite der Überhangspule die Nut 47 komplett ausfüllt. Die überstehende Spulenseite der Überhangspule wird zum entsprechenden Zeitpunkt in Nut 2 am anderen Ende des Lamellenpakets 5 gefügt.

Im Falle der Zweischichtschleifenwicklung, die als Wicklungsüberhang drei Überhangspulen aufweist, steht an jedem Phasenwicklungs-Ende eine Spulenseite der jeweiligen Überhangspule gegenüber dem Lamellenpaket 5 in der Länge über, während die anderen Spulenseiten der Überhangspulen die Nuten 48, 47 und 46 komplett ausfüllen. Die überstehenden Spulenseiten der Überhangspulen werden zum jeweils entsprechenden Zeitpunkt in die Nuten 3, 2 und 1 gefügt. Der Biegevorgang endet dann bei Nut 1 des Lamellenpakets 5.

Die weitere Beschreibung erfolgt beispielhaft und der Einfachheit halber nur noch für die Einschichtschleifenwicklung, ist aber in der oben angedeuteten Weise entsprechend auf die Zweischichtschleifenwicklung übertragbar.

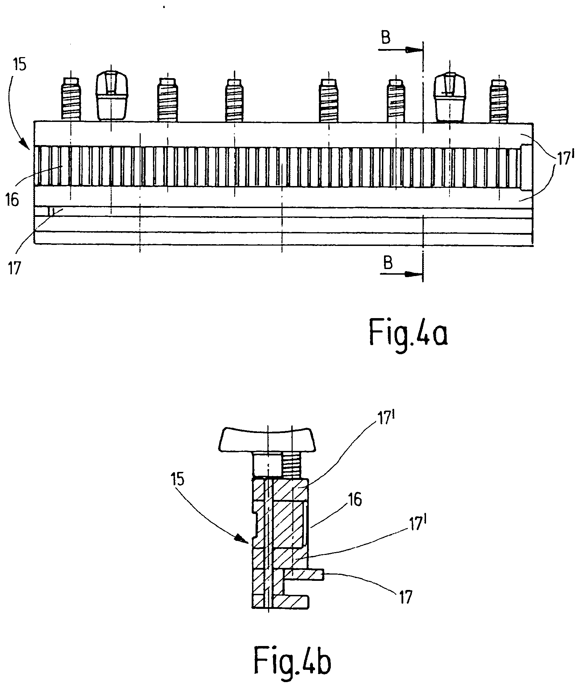

Zu Beginn des Biegeverfahrens wird das Lamellenpaket 5 in einer als Andrückleiste ausgebildeten Andrückeinheit 15 positioniert, die Wicklung zum Lamellenpaket 5 axial ausgerichtet und das Lamellenpaket 5 axial vorgespannt. Die Andrückeinheit 15 ist in Figur 4a, 4b detaillierter dargestellt. Die Andrückeinheit 15 weist eine Länge auf, die dem Umfang des Lamellenpakets 5 entspricht. Weiterhin weist die Andrückeinheit 15 einen nahezu unendlich großen Durchmesser auf und ist im Biegebereich gerade ausgebildet. An ihrer dem Lamellenpaket 5 zugewandten Seite 16 ist eine gezahnte oder gewellte Kontur vorgesehen, die mit den oben genannten Außenzähnen des Lamellenpakets 5 korrespondiert.

Die Andrückeinheit 15 wird in der Biegevorrichtung 10 aufgespannt und dabei bezüglich des Biegedorns 11 axial und tangential ausgerichtet. Das quaderförmige Lamellenpaket 5 wird dann mit seinem ersten vollen Zahn Z des ersten Endes, d.h. dem Lamellenpaket-Ende für den Biegebeginn mit Nut 48 auf dem Biegedorn 11 zwischen zwei der radialen, als Noppen ausgebildeten Erhöhungen 13 so positioniert, dass die Zahnmitte genau auf einem Radial des Biegedoms 11 liegt, In dieser Position wird das Lamellenpaket 5 auf dem Biegedorn 11 fest gehalten.

Danach wird ein erster Stempel 18 radial von außen auf das Lamellenpaket 5 zugeführt und mit ihm eine Kraft auf besagten Halbzahn T1 des ersten Lamellenpaket-Endes aufgebracht. Diese Kraft, nachfolgend Haltekraft genannt, dient zum Fixieren des Lamellenpakets 5 beim Biegen. Einerseits muss die Haltekraft als Gegenkraft zur Biegekraft größer sein als die Biegekraft selbst, andererseits jedoch nicht so groß, dass sie den ersten Halbzahn T1 auf den Biegedom 11 drücken oder gar bleibend so verformen könnte, dass in diesem Bereich das Lamellenpaket 5 schon seine endgültige runde Form mit vorbestimmten Durchmesser annähme. Auch bei voll wirkender Haltekraft und damit maximaler plastischer und elastischer Verformung verbleibt zwischen Zahnkopf Z1 des ersten Halbzahns T1 und Biegedom 11 immer noch ein Abstand. Auch die erste Nut des ersten Lamellenpaket-Endes, d.h. Nut 48, kann mit der Haltekraft nicht vollständig geschlossen werden, sondern nur teilweise, nämlich um ca. 2/3 (ca. 5°) des nominellen Winkels einer Nutteilung, die sich rechnerisch aus dem Vollkreis dividiert durch die Nutanzahl, d.h. 360°/48=7,5°, ergibt.

Anfangs, wenn der erste Stempel 18 auf das Lamellenpaket 5 drückt und somit die Haltekraft am Lamellenpaket 5 anliegt, bleibt Nut 47, d.h. die zweite Nut vom ersten Lamellenpaket-Ende her, noch offen. Genau in dieser Nut 47 befindet sich eine Spulenseite der Überhangspule, welche die Nut 47 komplett ausfüllt. Bevor gebogen und dadurch die Nut 47 geschlossen wird, müssen beide Spulenseiten, d.h. die komplette Überhangspule, in geeigneter Weise gehalten werden. Dies kann ausschließlich mit der den Wicklungsüberhang darstellenden Spulenseite erfolgen, die im flachen Zustand gegenüber dem Lamellenpaket 5 übersteht und deshalb als einziges Spulenteil frei zugänglich auf einfache Weise gegriffen werden kann. Hierzu wird eine weitere, nicht dargestellte Vorrichtung auf beiden Seiten der Spulenseite um die Spulenseite seitlich herumgeführt, die die Spulenseite käfigartig umschließt und festhält.

Angetrieben wird die als Andrückleiste ausgebildete Andrückeinheit 15 durch eine Druckrolle 19, die entlang einer Kreisbahn um den Biegedorn 11 herumgeführt wird. Die Arbeitsposition der Druckrolle 19 für das Biegen ist dadurch gekennzeichnet, dass die Position, an der die Druckrolle 19 an der Andrückeinheit 15 anliegt, gegenüber dem Zahn, der bereits am Biegedorn 11 anliegt, in Biegerichtung voreilt. Je größer die Vorspur, desto kleiner die Biegekraft und desto größer der Bereich am zweiten Lamellenpaket-Ende, das mit dieser Einstellung nicht gebogen werden kann, weil am Biegeende die Druckrolle 19 über die als Andrückleiste ausgebildete Andrückeinheit 15 bzw. das Lamellenpaket 5 hinausläuft.

Das eigentliche Biegeumformen erfolgt, sobald die Druckrolle 19 auf der Kreisbahn um den Biegedorn 11 herumgeführt wird und dabei in Biegerichtung gezogen wird. Die Druckrolle 19 wiederum treibt auf der ihr vorgegebenen Bahnkurve die Andrückeinheit 15 so an, dass das Lamellenpaket 5 sich um den Biegedorn 11 herumschlingt und dabei gleichzeitig aus der Andrückeinheit 15 herausgezogen wird.

Für das Biegeumformen gilt die Bedingung, dass die Zugkraft, die von der Biegerolle bzw. der Andrückeinheit 15 auf das Lamellenpaket 5 übertragen wird, stets kleiner sein muss als die Haltekraft, die am ersten Lamellenpaket-Ende zur Fixierung des Lamellenpakets 5 auf dem Biegdom 11 auf das Lamellenpaket ausgeübt wird und der Zugkraft standhalten muss. Nur so kann sichergestellt werden, dass auf den ersten vollen Zahn keine Kraft in tangentialer Richtung der Zähne wirkt und auch generell der Biegevorgang für alle Zähne des Lamellenpakets 5 tangentialkraftfrei abläuft, was die radiale Ausrichtung der Zähne Z beim rundgebogenen elektromagnetischen Element sicherstellt.

Das Biegen des Lamellenpakets 5 mit einer Biegerolle, die einen unendlich großen Durchmesser aufweist, was bei der als Andrückleiste ausgebildeten Andrückeinheit 15 gegeben ist, erfolgt unter axialer Vorspannung der Lamellen, wozu Klemmleisten 17' an der Andrückeinheit 15 vorgesehen sind. Dadurch werden bei den Lamellen geringer Blechdicke ein Wellen und andere unzulässige Verformungen wirksam unterbunden und die gewünschte Maßhaltigkeit sicher erzielt.

Das Biegeumformen des Lamellenpakets 5 erfolgt abschnittsweise in verschiedenen Winkelpositionen, bei denen mindestens eine Spannbacke 20, 21 aktiviert ist. Die jeweilige Spannbacke 20, 21, die ebenfalls wie der erste Stempel 18 von radial außen an den Biegedorn 11 heranführbar ist, wird auf das Lamellenpaket 5 zugeführt und mit ihr eine Kraft auf den dann bereits gebogenen Teil des Lamellenpakets 5 so ausgeübt, dass das Lamellenpaket 5 gegen den Biegedorn 11 gedrückt wird. Dadurch wird eine Haltefunktion und/oder Klemmfunktion ausgeübt und sozusagen das Lamellenpaket 5 umgespannt, d.h. die Haltekraft des ersten Stempels 18 wird von einer ersten Spannbacke 20 oder 21 so übernommen, dass der erste Stempel 18 entfernt werden kann, etc.

Ideale Spannbedingungen sind dann gegeben, wenn der gebogene Bereich des Lamellenpakets 5 gleichmäßig am Biegedorn 11 angedrückt und damit das Lamellenpaket 5 in diesem Bereich exakt gegenüber dem Biegedorn 11 gehalten bleibt.

In einem weiteren Verfahrensschritt wird die Überhangspule in die Aussparung bzw. Nut 12 für den Überhang im Biegedorn 11 so gefügt, dass die käfigartige Vorrichtung, die anfangs den Wicklungsüberhang fixiert hatte, entfernt werden kann.

Das Fügen der Überhangspule mitsamt dem zugehörigen Nutverschluss von der Nut 12 im Biegedorn 11 in die Nut 2 des Lamellenpakets 5 erfolgt, sobald die Nut 2 des Lamellenpakets 5 der Nut 12 im Biegedorn 11 gegenübersteht.

Sobald die Druckrolle 19 über das Lamellenpaket-Ende hinausgelaufen ist, ist der Biegevorgang beendet, und die Andrückeinheit 15 kann entfernt werden.

Mit einem zweiten Stempel 22, der wiederum radial von außen auf das Lamellenpaket 5 zugeführt werden kann, werden die beiden Lamellenpaket-Enden von einem festen Teil des Stempels 22 auf dem Biegedorn 11 festgehalten, und ein beweglicher Teil des Stempels 22 fährt zwischen den beiden Enden des Lamellenpakets 5 bis zum Biegedorn 11 vor, drückt dabei auf die Flanken der beiden Halbzähne T1, T2 und spreizt diese so auseinander, dass sie sich in tangentialer Richtung verformen und dabei die Nuten 48 und 1 verschließen. Im weiteren Verfahrensablauf erfolgt noch die Übergabe zum Fertigumformen des zwar gebogenen, jedoch noch offenen Lamellenpakets 5 an eine zweite Vorrichtung 25 der erfindungsgemäßen Fertigungseinrichtung, die gleichzeitig auch als Schweißvorrichtung dienen kann.

Das gebogene, jedoch noch offene Lamellenpaket 5 wird lageorientiert in die Vorrichtung 25 zum Fertigumformen und Verbinden der beiden Lamellenpaket-Enden eingelegt. Dies bedeutet, dass das Lamellenpaket 5 mit seinem Spalt, der noch zwischen den beiden Lamellenpaket-Enden vorhanden ist, derart in die Vorrichtung 25 eingelegt wird, dass der Spalt zu einem Schweißfenster 26 hin zeigt.

Die zweite Vorrichtung 25 weist eine Anschlagfläche für eine zuerst zu fügende Stirnseite des Lamellenpakets 5 auf, wodurch das Lamellenpaket 5 axial ausgerichtet wird.

Die radiale Ausrichtung erfolgt im ersten Ansatz durch einen Schweißdorn 27, dessen Durchmesser dem Innendurchmesser des fertigen elektromagnetischen Elements entspricht. Das Anlegen von Radialstempeln erfolgt stufenweise an das vorgebogene Lamellenpaket 5, das sich dann an den Schweißdorn 27 anlegt.

Als Radialstempel werden Segmente 28 bezeichnet, die sich entlang des Umfangs abschnittsweise entlang des Lamellenpaket-Außenumfangs erstrecken und das Lamellenpaket an den Schweißdorn 27 drücken. Die Segmente 28 werden in mindestens zwei Gruppen 28.1, 28.2 zusammengefasst, die unterschiedlich, z.B. Kraft-Weg-gesteuert, angetrieben werden.

Die Segmente 28 der ersten Gruppe 28.1, die sich entlang des Umfangs über einen vorbestimmten Winkelbereich von weniger als 180° erstrecken und bezüglich der Lamellenpaket-Enden, die noch voneinander beabstandet sind, auf der anderen Durchmesserseite angeordnet sind, werden anfangs so weit zugestellt, dass im Bereich der Segmente 28 der ersten Gruppe 28.1 sich das Lamellenpaket 5 an den Schweißdorn 27 anlegt.

Danach werden die Segmente 28 der zweiten Gruppe 28.2 und jeder weiteren Gruppe, die sich ebenso über einen Winkelbereich entlang des Umfangs erstrecken, der weniger als 180° ist und sich an den der ersten bzw. jeweils vorhergehenden Segment-Gruppe 28.1, 28.2 anschließt, soweit zugestellt, dass auch im Bereich der zweiten Gruppe 28.2 sich das Lamellenpaket 5 an den Schweißdorn 27 anlegt.

Ein weiterer Teil der zweiten Vorrichtung 25, der das Lamellenpaket 5 axial vorspannt, wird wiederum Kraft-Weg-gesteuert zugestellt. Die dabei wirkende Axialkraft wird entlang des Innen- und Außendurchmessers auf beide Stirnseiten AS und BS des Lamellenpakets 5 eingeleitet und verhindert unzulässige Verformungen beim weiteren Verfahrensablauf.

Dieser ist dadurch gekennzeichnet, dass alle Segmente 28 aller Gruppen 28.1, 28.2 gleichzeitig, gleichmäßig und gleich weit so zugestellt werden, dass das Lamellenpaket 5 an seinem Umfang radial gleich stark auf den Schweißdorn 27 gerückt wird und über die elastische Verformung hinaus auch plastisch entsprechend der gewünschten Maßhaltigkeit auf seinen Enddurchmesser verformt wird.

Damit ist das Lamellenpaket 5 fertig umgeformt, und die beiden Lamellenpaket-Enden stoßen spaltfrei aneinander und können miteinander verbunden werden.

Nach dem Fertigumformen bedarf es keiner weiteren Bearbeitung mehr, weil der Durchmesser und die Rundheit der Bohrung des vorzugsweise einen Stator bildenden elektromagnetischen Elements bereits durch die plastische Verformung maßhaltig hergestellt sind. Auch treten keine unzulässigen Verformungen wie z.B. ein Wellen der Lamellen beim Biegen von Lamellen mit geringen Blechstärken auf. Die Rundheit kann besser als 0,15, insbesondere besser als 0,1 mm, insbesondere im Stoßbereich der beiden Lamellenpaket-Enden betragen.

## Patentansprüche

1. Fertigungseinrichtung zum Biegeumformen eines elektromagnetischen Elements einer elektrischen Maschine, wobei das elektromagnetische Element aus einem biegeumgeformten Lamellenpaket (5) gebildet ist, wobei eine erste Vorrichtung (10) zum Biegeumformen des quaderförmigen Lamellenpakets (5) und damit zum Rundbiegen vorhanden ist, sowie eine zweite Vorrichtung (25) zum Fertigumformen des vorgebogenen Lamellenpakets (5) vorhanden ist, die dazu dient, das vorgebogene und noch an Stoßkanten bildenden Enden offene Lamellenpaket so fertig umzuformen, das es an den Enden des Lamellenpakets spaltfrei ist, wobei die zweite Vorrichtung (25) eine Baugruppe (28) zur radialen Zentrierung und Pressung des Lamellenpakets (5) aufweist, **dadurch gekennzeichnet, dass** die zweite Vorrichtung (25) eine Baugruppe (29) zur axialen Fixierung und Pressung des Lamellenpakets (5) aufweist.

2. Fertigungseinrichtung nach Anspruch 1, **dadurch gekennzeichnet, dass** die erste Vorrichtung (10) einen Biegedorn (11) umfasst, um den das Lamellenpaket (5) biegbar ist, wobei der Biegedorn (11) einen größeren Außendurchmesser aufweist als einem Innendurchmesser des fertig gebogenen elektromagnetischen Elements entspricht.

3. Fertigungseinrichtung nach Anspruch 1 oder 2, **dadurch gekennzeichnet, dass** der Biegedorn (11) entlang seines Umfangs wenigstens abschnittsweise radiale Erhöhungen (13) aufweist

4. Fertigungseinrichtung nach einem der vorhergehenden Ansprüche, **dadurch gekennzeichnet, dass** der Biegedorn (11) wenigstens eine axial verlaufende Nut (12) aufweist.

5. Fertigungseinrichtung nach einem der vorhergehenden Ansprüche, **dadurch gekennzeichnet, dass** die erste Vorrichtung (10) eine Andrückeinheit (15) aufweist.

6. Fertigungseinrichtung nach Anspruch 5, **dadurch gekennzeichnet, dass** die Andrückeinheit (15) als Biegerolle ausgebildet ist.

7. Fertigungseinrichtung nach Anspruch 6, **dadurch gekennzeichnet, dass** die Andrückeinheit (15) einen Durchmesser von mehr als 25 mm aufweist.

8. Fertigungseinrichtung nach einem der Ansprüche 5 bis 7, **dadurch gekennzeichnet, dass** die Andrückeinheit (15) einen geraden Abschnitt aufweist.

9. Fertigungseinrichtung nach Anspruch 8, **dadurch gekennzeichnet, dass** die Andrückeinheit (15) als Andrückleiste ausgebildet ist.

10. Fertigungseinrichtung nach einem der Ansprüche 5 bis 9, **dadurch gekennzeichnet, dass** die Andrückeinheit (15) an ihrer dem Lamellenpaket (5) zugewandten Seite (16) eine gezahnte oder gewellte Kontur aufweist.

11. Fertigungseinrichtung nach einem der Ansprüche 9 oder 10, **dadurch gekennzeichnet, dass** die Andrückeinheit (15) mittels einer Druckrolle (19) geschleppt antreibbar ist.

12. Fertigungseinrichtung nach einem der Ansprüche 5 bis 11, **dadurch gekennzeichnet, dass** die Andrückeinheit (15) zusätzliche Vorrichtungen (17, 17') zur axialen Ausrichtung von Wickelköpfen und/oder für ein axiales Vorspannen des Lamellenpakets (5) aufweist.

13. Fertigungseinrichtung nach einem der vorhergehenden Ansprüche, **dadurch gekennzeichnet, dass** ein Teil der zweiten Vorrichtung (25) als Übergabewerkzeug des vorgebogenen Lamellenpakets (5) zwischen der ersten und der zweiten Vorrichtung (10, 25) vorgesehen ist.

14. Fertigungseinrichtung nach einem der vorhergehenden Ansprüche, **dadurch gekennzeichnet, dass** die zweite Vorrichtung (25) eine Einspannvorrichtung (28, 29) für das vorgebogene Lamellenpaket (5) zum stoffschlüssigen Fügen von zusammenstoßenden freien Enden des Lamellenpakets (5) aufweist.

15. Fertigungseinrichtung nach einem der vorhergehenden Ansprüche, **dadurch gekennzeichnet, dass** die zweite Vorrichtung (25) einen Schweißdorn (27) mit einem Durchmesser entsprechend dem Innendurchmesser des fertig gebogenen Lamellenpakets (5) aufweist.

16. Fertigungseinrichtung nach Anspruch 15, **dadurch gekennzeichnet, dass** der Schweißdorn (27) an seinem Umfang radiale Erhöhungen aufweist, die mit Nutöffnungen (1, 48) des fertig gebogenen Lamellenpakets (5) korrespondieren.

17. Fertigungseinrichtung nach Anspruch 15 oder 16, **dadurch gekennzeichnet, dass** die zweite Vorrichtung (25) eine Baugruppe mit Segmenten (28) zum radialen Andrücken des vorgebogenen Lamellenpakets (5) auf den Schweißdorn (27) aufweist.

18. Fertigungseinrichtung nach Anspruch 17, **dadurch gekennzeichnet, dass** die Segmente (28) in wenigstens zwei Gruppen (28.1, 28.2) aufgeteilt sind.

19. Fertigungseinrichtung nach Anspruch 17 oder 18, **dadurch gekennzeichnet, dass** jede Gruppe (28.1, 28.2) von Segmenten (28) sich bezogen auf den Außendurchmesser des fertig gebogenen Lamellenpakets (5) über einen Winkelbereich von weniger als 180° erstreckt.

20. Fertigungseinrichtung nach einem der Ansprüche 15 bis 17, **dadurch gekennzeichnet, dass** die Segmente (28) aus jeweils zwei aufeinander gleitenden Keilen gebildet sind.

21. Fertigungseinrichtung nach einem der vorhergehenden Ansprüche, **dadurch gekennzeichnet, dass** die zweite Vorrichtung (25) die besagte Baugruppe (29) zur axialen Zentrierung und Pressung des fertig gebogenen Lamellenpakets (5) aufweist, wobei eine Axialkraft auf beiden Stirnseiten (AS, BS) sowohl am Innendurchmesser als auch am Außendurchmesser des fertig gebogenen Lamellenpakets (5) einleitbar ist.

22. Verfahren zur Herstellung eines elektromagnetischen Elements mit einer Fertigungseinrichtung nach einem der Ansprüche 1 bis 21, **dadurch gekennzeichnet, dass** in ein im Wesentlichen quaderförmiges Lamellenpaket (5) eine Wicklung mit Überhangspule gefügt wird, das Lamellenpaket (5) in der ersten Vorrichtung (10) biegeumgeformt und damit so rundgebogen wird, dass das so vorgebogene Lamellenpaket (5) mit seinen Stoßkanten bildenden Lamellenpaket-Enden einen Spalt bildet, eine Überhangspule der Überhangwicklung von dem einen Lamellenpaket-Ende in eine Nut des anderen Lamellenpaket-Endes gefügt wird und das vorgebogene Lamellenpaket (5) an die zweite Vorrichtung (25) zum Fertigumformen übergeben und in der zweiten Vorrichtung (25) in einer Baugruppe (29) axial fixiert und gepresst wird.

23. Verfahren nach Anspruch 22, **dadurch gekennzeichnet, dass** das Lamellenpaket (5) in der zweiten Vorrichtung (25) fertig umgeformt wird und seine Enden zueinander gefügt werden.

## Claims

1. Manufacturing device for shaping an electromagnetic element of an electrical machine by bending, wherein the electromagnetic element is formed from a laminate stack (5) which has been shaped by bending, wherein a first apparatus (10) for shaping the cuboidal laminate stack (5) by bending and therefore bending the said cuboidal laminate stack around is provided, and a second apparatus (25) for finally shaping the pre-bent laminate stack (5) is provided, the said bending around and final shaping serving to finally shape the pre-bent laminate stack, which is still open at the ends which form abutment edges, such that it has no gaps at the ends of the laminate stack, wherein the second apparatus (25) has an assembly (28) for radially centring and pressing the laminate stack (5), **characterized in that** the second apparatus (25) has an assembly (29) for axially fixing and pressing the laminate stack (5).

2. Manufacturing device according to Claim 1, **characterized in that** the first apparatus (10) comprises a bending mandrel (11) about which the laminate stack (5) can be bent, wherein the bending mandrel (11) has a larger outside diameter than corresponds to an inside diameter of the finally bent electromagnetic element.

3. Manufacturing device according to Claim 1 or 2, **characterized in that** the bending mandrel (11) has radial raised portions (13) along its circumference at least in sections.

4. Manufacturing device according to one of the preceding claims, **characterized in that** the bending mandrel (11) has at least one axially running groove (12).

5. Manufacturing device according to one of the preceding claims, **characterized in that** the first apparatus (10) has a contact-pressure unit (15).

6. Manufacturing device according to Claim 5, **characterized in that** the contact-pressure unit (15) is in the form of a bending roller.

7. Manufacturing device according to Claim 6, **characterized in that** the contact-pressure unit (15) has a diameter of more than 25 mm.

8. Manufacturing device according to one of Claims 5 to 7, **characterized in that** the contact-pressure unit (15) has a straight section.

9. Manufacturing device according to Claim 8, **characterized in that** the contact-pressure unit (15) is in the form of a contact-pressure strip.

10. Manufacturing device according to one of Claims 5 to 9, **characterized in that** the contact-pressure unit (15) has a toothed or corrugated contour on its side (16) which faces the laminate stack (5).

11. Manufacturing device according to either of Claims 9 and 10, **characterized in that** the contact-pressure unit (15) can be driven in a towed manner by means of a pressure roller (19).

12. Manufacturing device according to one of Claims 5 to 11, **characterized in that** the contact-pressure unit (15) additionally has apparatuses (17, 17') for axially orienting end windings and/or for axially prestressing the laminate stack (5).

13. Manufacturing device according to one of the preceding claims, **characterized in that** a portion of the second apparatus (25) is provided as a transfer tool of the pre-bent laminate stack (5) between the first and the second apparatus (10, 25).

14. Manufacturing device according to one of the preceding claims, **characterized in that** the second apparatus (25) has a clamping apparatus (28, 29) for the pre-bent laminate stack (5) for cohesively joining abutting free ends of the laminate stack (5).

15. Manufacturing device according to one of the preceding claims, **characterized in that** the second apparatus (25) has a welding mandrel (27) with a diameter corresponding to the inside diameter of the finally bent laminate stack (5).

16. Manufacturing device according to Claim 15, **characterized in that** the welding mandrel (27) has, on its circumference, radial raised portions which correspond to slot openings (1, 48) in the finally bent laminate stack (5).

17. Manufacturing device according to Claim 15 or 16, **characterized in that** the second apparatus (25) has an assembly with segments (28) for radially pressing the pre-bent laminate stack (5) onto the welding mandrel (27).

18. Manufacturing device according to Claim 17, **characterized in that** the segments (28) are divided into at least two groups (28.1, 28.2).

19. Manufacturing device according to Claim 17 or 18, **characterized in that** each group (28.1, 28.2) of segments (28) extends, with respect to the outside diameter of the finally bent laminate stack (5), over an angular range of at least 180°.

20. Manufacturing device according to one of Claims 15 to 17, **characterized in that** the segments (28) are formed from in each case two wedges which slide on one another.

21. Manufacturing device according to one of the preceding claims, **characterized in that** the second apparatus (25) has the said assembly (29) for axially centring and pressing the finally bent laminate stack (5), wherein an axial force can be introduced on both end sides (AS, BS) both at the inside diameter and also at the outside diameter of the finally bent laminate stack (5).

22. Method for producing an electromagnetic element using a manufacturing device according to one of Claims 1 to 21, **characterized in that** a winding with an overhang coil is joined into a substantially cuboidal laminate stack (5), the laminate stack (5) is shaped by bending in the first apparatus (10) and therefore bent around such that the laminate stack (5) which is pre-bent in this way forms a gap by way of its laminate stack ends which form abutment edges, an overhang coil of the overhang winding is joined from one laminate stack end into a slot in the other laminate stack end, and the pre-bent laminate stack (5) is transferred to the second apparatus (25) for final shaping and is axially fixed and pressed in an assembly (29) in the second apparatus (25).

23. Method according to Claim 22, **characterized in that** the laminate stack (5) is finally shaped in the second apparatus (25) and the ends of the said laminate stack are joined to one another.

## Revendications

1. Appareil de fabrication servant au façonnage par pliage d'un élément électromagnétique d'une machine électrique, l'élément électromagnétique étant formé à partir d'un paquet de lamelles (5) façonné par pliage, un premier dispositif (10) étant présent pour le façonnage par pliage du paquet de lamelles (5) parallélépipédique et ainsi pour le cintrage, ainsi qu'un deuxième dispositif (25) pour le façonnage final du paquet de lamelles (5) pré-plié, lequel sert à réaliser le façonnage final du paquet de lamelles préplié et encore ouvert au niveau des extrémités formant les arêtes d'aboutage de telle sorte qu'il est dépourvu d'interstices aux extrémités du paquet de lamelles, le deuxième dispositif (25) possédant un sous-ensemble (28) destiné au centrage radial et au pressage du paquet de lamelles (5), **caractérisé en ce que** le deuxième dispositif (25) possède un sous-ensemble (29) destiné au fixage radial et au pressage du paquet de lamelles (5).

2. Appareil de fabrication selon la revendication 1, **caractérisé en ce que** le premier dispositif (10) comprend un mandrin de pliage (11) autour duquel peut être plié le paquet de lamelles (5), le mandrin de pliage (11) possédant un diamètre extérieur plus grand qu'un diamètre intérieur de l'élément électromagnétique plié terminé.

3. Appareil de fabrication selon la revendication 1 ou 2, **caractérisé en ce que** le mandrin de pliage (11) possède au moins dans certaines portions des élévations radiales (13) le long de son pourtour.

4. Appareil de fabrication selon l'une des revendications précédentes, **caractérisé en ce que** le mandrin de pliage (11) possède au moins une rainure (12) qui s'étend dans le sens axial.

5. Appareil de fabrication selon l'une des revendications précédentes, **caractérisé en ce que** le premier dispositif (10) possède une unité de pressage (15).

6. Appareil de fabrication selon la revendication 5, **caractérisé en ce que** l'unité de pressage (15) est réalisée sous la forme d'un galet de pliage.

7. Appareil de fabrication selon la revendication 6, **caractérisé en ce que** l'unité de pressage (15) présente un diamètre supérieur à 25 mm.

8. Appareil de fabrication selon l'une des revendications 5 à 7, **caractérisé en ce que** l'unité de pressage (15) possède une portion droite.

9. Appareil de fabrication selon la revendication 8, **caractérisé en ce que** l'unité de pressage (15) est réalisée sous la forme d'une baguette de pressage.

10. Appareil de fabrication selon l'une des revendications 5 à 9, **caractérisé en ce que** l'unité de pressage (15) possède un contour denté ou ondulé sur son côté (16) faisant face au paquet de lamelles (5).

11. Appareil de fabrication selon l'une des revendications 9 ou 10, **caractérisé en ce que** l'unité de pressage (15) peut être entraînée en traction au moyen d'un rouleau presseur (19).

12. Appareil de fabrication selon l'une des revendications 5 à 11, **caractérisé en ce que** l'unité de pressage (15) possède des dispositifs supplémentaires (17, 17') destinés à l'orientation axiale de têtes d'enroulement et/ou à une prétension axiale du paquet de lamelles (5).

13. Appareil de fabrication selon l'une des revendications précédentes, **caractérisé en ce qu'**une partie du deuxième dispositif (25) est conçue comme un outil de transfert du paquet de lamelles (5) pré-plié entre le premier et le deuxième dispositif (10, 25).

14. Appareil de fabrication selon l'une des revendications précédentes, **caractérisé en ce que** le deuxième dispositif (25) possède un dispositif de serrage (28, 29) pour le paquet de lamelles (5) préplié destiné au jointage par liaison de matières des extrémités libres aboutées du paquet de lamelles (5).

15. Appareil de fabrication selon l'une des revendications précédentes, **caractérisé en ce que** le deuxième dispositif (25) possède un mandrin de soudage (27) ayant un diamètre qui correspond au diamètre intérieur du paquet de lamelles (5) à l'état plié final.

16. Appareil de fabrication selon la revendication 15, **caractérisé en ce que** le mandrin de soudage (27) possède sur son pourtour des élévations radiales qui correspondent à des ouvertures de rainure (1, 48) du paquet de lamelles (5) à l'état plié final.

17. Appareil de fabrication selon la revendication 15 ou 16, **caractérisé en ce que** le deuxième dispositif (25) possède un sous-ensemble doté de segments (28) servant au pressage radial du paquet de lamelles (5) pré-plié sur le mandrin de soudage (27).

18. Appareil de fabrication selon la revendication 17, **caractérisé en ce que** les segments (28) sont divisés en au moins deux groupes (28.1, 28.2).

19. Appareil de fabrication selon la revendication 17 ou 18, **caractérisé en ce que** chaque groupe (28.1, 28.2) de segments (28) s'étend sur une plage angulaire de moins de 180° par rapport au diamètre extérieur du paquet de lamelles (5) à l'état plié final.

20. Appareil de fabrication selon l'une des revendications 15 à 17, **caractérisé en ce que** les segments (28) sont formés à chaque fois de deux cales qui glissent l'une sur l'autre.

21. Appareil de fabrication selon l'une des revendications précédentes, **caractérisé en ce que** le deuxième dispositif (25) possède ledit sous-ensemble (29) destiné au centrage radial et au pressage du paquet de lamelles (5) à l'état plié final, une force axiale pouvant être exercée sur les deux côtés frontaux (AS, BS) à la fois sur le diamètre intérieur et sur le diamètre extérieur du paquet de lamelles (5) à l'état plié final.

22. Procédé de production d'un élément électromagnétique avec un appareil de fabrication selon l'une des revendications 1 à 21, **caractérisé en ce qu'**un enroulement avec une bobine en porte-à-faux est joint dans un paquet de lamelles (5) sensiblement parallélépipédique, le paquet de lamelles (5) est façonné par pliage dans un premier dispositif (10) et ainsi cintré de telle sorte que le paquet de lamelles (5) ainsi pré-plié forme un interstice avec ses extrémités de paquet de lamelles formant des arêtes d'aboutage, une bobine en porte-à-faux de l'enroulement en porte-à-faux d'une extrémité du paquet de lamelles est jointe dans une rainure de l'autre extrémité du paquet de lamelles et le paquet de lamelles (5) préplié est transféré au deuxième dispositif (25) en vue du façonnage final et il est fixé axialement et pressé dans un sous-ensemble (29) dans le deuxième dispositif (25).

23. Procédé selon la revendication 22, **caractérisé en ce que** le façonnage final du paquet de lamelles (5) est réalisé dans le deuxième dispositif (25) et ses extrémités sont jointes l'une à l'autre.
